# EUROPEAN PATENT APPLICATION

(11) **EP 4 714 901 A1**
(43) Date of publication of application: **25.03.2026**
(21) Application number: 23938352.4
(22) Date of filing: 19.05.2023
(51) Int. Cl.: C01B 13/10

(54) **OZONE SUPPLY DEVICE AND OZONE SUPPLY METHOD**

(71) Applicant: Mitsubishi Electric Corporation, Chiyoda-ku Tokyo 100-8310 (JP)
(72) Inventor: KOGA, Hiromichi, Tokyo 100-8310 (JP); ODAI, Yoshiaki, Tokyo 100-8310 (JP); YASUNAGA, Nozomu, Tokyo 100-8310 (JP); MATSUURA, Yoko, Tokyo 100-8310 (JP); OINUMA, Gaku, Tokyo 100-8310 (JP)
(74) Representative: Witte, Weller & Partner Patentanwälte mbB
(86) International application number: PCT/JP2023/018771
(87) International publication number: WO 2024/241375

(57) **Abstract**

An ozone supply apparatus (100) includes an ozone pipe (10) connecting an ozone generator (6) and an adsorption tower (7); a decompression circuit (30) including a vacuum pump (12) discharging gas sucked from a suction port (121) from a discharge port (122), a primary pipe (15) connecting the suction port (121) to the ozone pipe (10), and a secondary pipe (19) connected to the discharge port (122), and sucking ozone gas desorbed from an adsorbent (7a) from inside of the adsorption tower (7); a dilution circuit (40) mixing dilution air into ozone gas flowing through the decompression circuit (30); a first flow meter (14) installed in the decompression circuit (30); a second flow meter (16) and a flow rate adjustment valve (17) installed in the dilution circuit (40); a pressure gauge (13) installed in the adsorption tower (7); and a control device (18) adjusting an opening degree of the flow rate adjustment valve (17) such that an estimated value of the ozone concentration of ozone gas discharged from the vacuum pump (12) to the secondary pipe (19) becomes a target value.

## Description

### Field

The present disclosure relates to an ozone supply apparatus and an ozone supply method for concentrating and holding ozone using an adsorption phenomenon of an adsorbent and diluting and supplying the held ozone.

### Background

Ozone which is a strong oxidizing agent is used in a wide range of fields such as water environment purification or semiconductor cleaning, and there is an increasing demand for establishment of a high-concentration and high-efficiency ozone generation technology. Since ozone has a self-decomposing property, it is difficult to store ozone in a gas phase at normal temperature. Therefore, an ozone supply apparatus that intermittently generates ozone as necessary is used to supply ozone.

As the ozone supply apparatus, an ozone supply apparatus that concentrates and holds ozone, using an adsorption phenomenon of an adsorbent installed in an adsorption tower and dilutes and supplies the held ozone is generally used. In the ozone supply apparatus that concentrates and supplies ozone using the adsorption phenomenon of the adsorbent, an ozone concentration in the adsorption tower depends on a negative pressure state in the adsorption tower, and the ozone concentration increases as the degree of vacuum in the tower increases. Since the ozone supply apparatus that concentrates and supplies ozone using the adsorption phenomenon of the adsorbent proceeds to a desorption process from an adsorption process in a pressurized state and performs desorption by a decompression operation in the desorption process, the degree of vacuum of the adsorption tower increases as the desorption process proceeds. Therefore, in the ozone supply apparatus that concentrates and supplies ozone using the adsorption phenomenon of the adsorbent, the ozone concentration of the ozone gas discharged from the adsorption tower fluctuates between a state where the degree of vacuum is low until the decompression mechanism reaches a rated operation in the initial stage of a desorption process and a state where the degree of vacuum is high when the decompression mechanism performs the rated operation in the later stage of the desorption process. As a result, the ozone supply apparatus that concentrates and supplies ozone using the adsorption phenomenon of the adsorbent has had a problem in that an ozone concentration of discharged ozone gas fluctuates.

Patent Literature 1 discloses an ozone supply apparatus that connects a dilution gas introduction path to a transfer path of desorption ozone gas from an ozone adsorbent that adsorbs and holds ozone gas, detects an ozone concentration of ozone gas flowing through the desorption ozone transfer path, and controls a dilution gas flow rate from the dilution gas introduction path based on a detection value of the ozone concentration, so as to enable control of both an ozone concentration and a flow rate of the ozone gas discharged from the apparatus. Since the ozone supply apparatus disclosed in Patent Literature 1 controls the dilution gas flow rate from the dilution gas introduction path based on the detection value of the ozone concentration, it is possible to suppress a fluctuation in the ozone concentration.

### Citation List

### Patent Literature

Patent Literature 1: Japanese Patent Application Laid-open No. 10-287404

### Summary of Invention

### Problem to be solved by the Invention

Although an ozone supply apparatus disclosed in Patent Literature 1 measures an ozone concentration of diluted ozone gas using an ozone concentration meter, it is known that a measurement performance of the ozone concentration meter changes over time. Therefore, with the ozone supply apparatus disclosed in Patent Literature 1, a target value and an actual ozone concentration may be different, even if a dilution gas flow rate from a dilution gas introduction path is controlled based on a detection value of the ozone concentration or the dilution gas flow rate from the dilution gas introduction path is controlled such that the detection value becomes the target value based on the detection value of the ozone gas concentration over time, and it has not been possible to stably supply ozone gas with a target ozone concentration.

The present disclosure has been made in view of the above, and an object of the present disclosure is to obtain an ozone supply apparatus that can stably supply ozone gas with a target ozone concentration.

### Means to Solve the Problem

In order to solve the above-described problem and achieve the object, an ozone supply apparatus according to the present disclosure comprises: an ozone generator to generate ozonized gas containing ozone gas; an adsorption tower including an adsorbent that adsorbs the ozone gas contained in the ozonized gas; an ozone pipe to connect the ozone generator to the adsorption tower; a decompression circuit to suck the ozone gas desorbed from the adsorbent from inside of the adsorption tower through the ozone pipe, the decompression circuit including a decompression mechanism to discharge, from a discharge port, gas sucked from a suction port, a primary pipe to connect the suction port to the ozone pipe, and a secondary pipe connected to the discharge port; a dilution circuit to mix dilution air into the ozone gas flowing through the decompression circuit; a first flow meter installed in the decompression circuit; a second flow meter and a flow rate adjustment valve installed in the dilution circuit; a pressure gauge installed in the adsorption tower; and a control device to estimate an ozone concentration of the ozone gas discharged by the decompression mechanism to the secondary pipe, based on a measurement value of each of the first flow meter, the second flow meter, and the pressure gauge and to adjust an opening degree of the flow rate adjustment valve such that an estimated value of the ozone concentration of the ozone gas discharged from the decompression mechanism to the secondary pipe becomes a preset target value.

### Effects of the Invention

According to the present disclosure, an effect can be achieved that an ozone supply apparatus that can stably supply ozone gas with a target ozone concentration is obtained.

### Brief Description of Drawings

FIG. 1 is a diagram illustrating a configuration of an ozone supply apparatus according to a first embodiment.
FIG. 2 is a diagram illustrating a change over time in a pressure in an adsorption tower of the ozone supply apparatus according to the first embodiment.
FIG. 3 is a diagram illustrating a configuration of a control device of the ozone supply apparatus according to the first embodiment.
FIG. 4 is a diagram illustrating an example of a relationship between the pressure in the adsorption tower of the ozone supply apparatus according to the first embodiment and an ozone concentration of desorbed ozone gas.
FIG. 5 is a flowchart illustrating a flow of an operation in a desorption process of the ozone supply apparatus according to the first embodiment.
FIG. 6 is a diagram illustrating a configuration of an ozone supply apparatus according to a second embodiment.
FIG. 7 is a flowchart illustrating a flow of an operation at the time of ozone desorption of the ozone supply apparatus according to the second embodiment.
FIG. 8 is a diagram illustrating a configuration of a control device of an ozone supply apparatus according to a third embodiment.
FIG. 9 is a flowchart illustrating a flow of an operation at the time of ozone desorption of the ozone supply apparatus according to the third embodiment.
FIG. 10 is a diagram illustrating a configuration of an ozone supply apparatus according to a fourth embodiment.
FIG. 11 is a diagram illustrating a hardware configuration of the control device of the ozone supply apparatus according to the first to fourth embodiments.

### Description of Embodiments

Hereinafter, an ozone supply apparatus and an ozone supply method according to embodiments will be described in detail with reference to the drawings.

### First Embodiment.

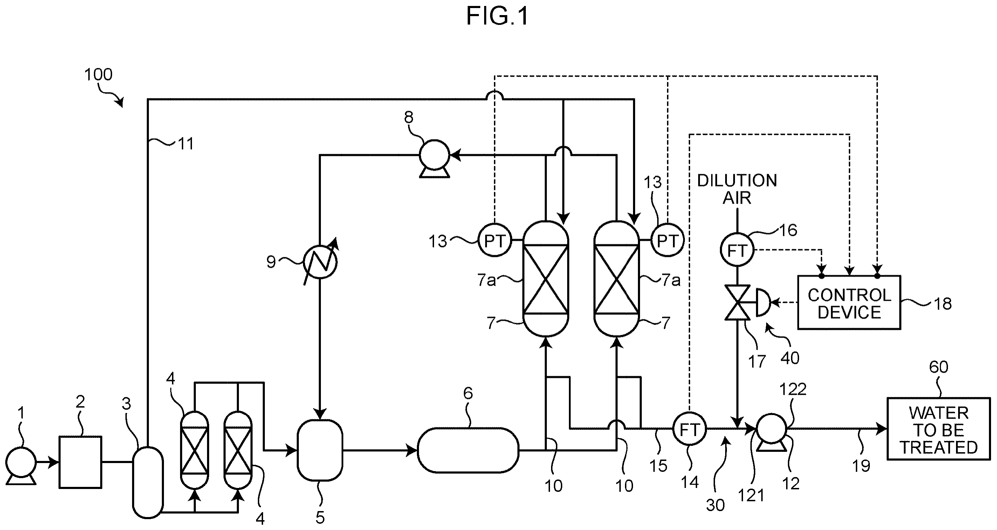

FIG. 1 is a diagram illustrating a configuration of an ozone supply apparatus according to a first embodiment. An ozone supply apparatus 100 according to the first embodiment includes a compressor 1 that compresses air, a dryer 2 that dehumidifies the compressed air, an air tank 3 that stores the dehumidified compressed air, an oxygen generator 4 that separates oxygen gas contained in the dehumidified compressed air, a raw material gas tank 5 that stores raw material gas, and an ozone generator 6 that generates ozonized gas containing ozone gas from the raw material gas. Furthermore, the ozone supply apparatus 100 includes an adsorption tower 7 in which an adsorbent 7a that adsorbs ozone gas is installed, a circulation pump 8 that returns the ozonized gas that is not adsorbed by the adsorbent 7a in the adsorption tower 7 to the raw material gas tank 5, a cooler 9 that cools the ozonized gas to be returned from the adsorption tower 7 to the raw material gas tank 5, and a desorption purge circuit 11 that supplies the dehumidified compressed air in the air tank 3 to the adsorption tower 7 and desorbs the ozone gas adsorbed by the adsorbent 7a.

Although a silent discharge type ozone generator driven by a high AC voltage can be applied, the ozone generator 6 is not limited to this.

In addition, the ozone supply apparatus 100 includes a decompression circuit 30 that includes a vacuum pump 12 that is a decompression mechanism that discharges gas, sucked from a suction port 121, from a discharge port 122, a primary pipe 15 that connects the suction port 121 to an ozone pipe 10, and a secondary pipe 19 that is connected to the discharge port 122, and that sucks ozone gas desorbed from the adsorbent 7a, from inside of the adsorption tower 7 through the ozone pipe 10. Here, although a configuration in which the decompression mechanism is the vacuum pump 12 is taken as an example, the decompression mechanism may be an ejector that sucks gas using pressurizing drive gas. Ozone water is generated by dissolving the ozone gas discharged from the discharge port 122 of the vacuum pump 12 to the secondary pipe 19, in water to be treated 60, and the generated ozone water is used, for example, for applications such as water environment purification or semiconductor cleaning.

Furthermore, the ozone supply apparatus 100 includes a dilution circuit 40 that mixes dilution air into the ozone gas flowing in the decompression circuit 30. The dilution air is air for diluting the ozone gas discharged from the discharge port 122 to the secondary pipe 19 such that an ozone concentration of the ozone gas becomes a target ozone concentration. In the ozone supply apparatus 100 according to the first embodiment, the dilution circuit 40 mixes the dilution air into the ozone gas flowing through the primary pipe 15.

The ozone supply apparatus 100 includes a first flow meter 14 installed in the decompression circuit 30, a second flow meter 16 and a flow rate adjustment valve 17 installed in the dilution circuit 40, and a pressure gauge 13 installed in the adsorption tower 7. The pressure gauge 13 measures a pressure in the adsorption tower 7. The first flow meter 14 measures a flow rate of ozone gas before being diluted with the dilution air flowing through the primary pipe 15. The second flow meter 16 measures a flow rate of the dilution air supplied by the dilution circuit 40 to the primary pipe 15. The flow rate adjustment valve 17 adjusts a flow rate of the dilution air supplied by the dilution circuit 40 to the primary pipe 15.

The ozone supply apparatus 100 includes a control device 18. The control device 18 controls an opening degree of the flow rate adjustment valve 17, based on a measurement value of each of the pressure gauge 13, the first flow meter 14, and the second flow meter 16.

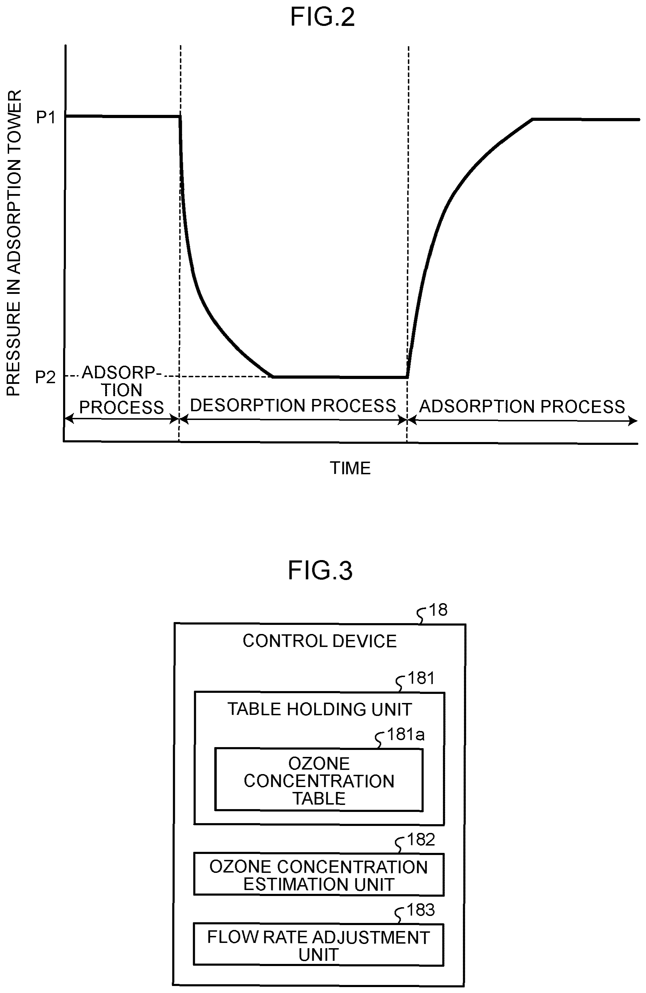

FIG. 2 is a diagram illustrating a change over time in a pressure in the adsorption tower of the ozone supply apparatus according to the first embodiment. The ozone supply apparatus 100 generates ozone gas, by alternately performing an adsorption process for adsorbing ozone by the adsorbent 7a installed in the adsorption tower 7 and a desorption process for generating desorption ozone gas by desorbing the ozone adsorbed by the adsorbent 7a.

In the adsorption process, by supplying the ozonized gas containing the ozone gas from the ozone generator 6 to the adsorption tower 7, the pressure in the adsorption tower 7 is increased to a preset first pressure P1. In the desorption process, the vacuum pump 12 sucks the ozone gas in the ozone pipe 10 so that the pressure in the adsorption tower 7 connected to the ozone pipe 10 is reduced to a preset second pressure P2.

In the adsorption process, the ozonized gas generated by the ozone generator 6 based on the raw material gas stored in the raw material gas tank 5 flows into the adsorption tower 7, and the ozone gas is adsorbed on the adsorbent 7a installed in the adsorption tower 7. Furthermore, the ozonized gas containing the ozone gas that has not been adsorbed on the adsorbent 7a in the adsorption tower 7 is returned to the raw material gas tank 5 by the circulation pump 8. Therefore, the raw material gas in the raw material gas tank 5 is mixed gas of the oxygen gas generated by the oxygen generator 4 and the ozonized gas.

In the desorption process, by supplying air to the adsorption tower 7 through the desorption purge circuit 11, the ozone gas adsorbed on the adsorbent 7a is replaced with the compressed air and is desorbed, and the ozone gas is generated in the adsorption tower 7. Furthermore, when the vacuum pump 12 generates a negative pressure, the ozone gas in the adsorption tower 7 connected to the ozone pipe 10 is sucked into the vacuum pump 12 through the primary pipe 15 and is discharged to outside of the apparatus through the secondary pipe 19.

FIG. 3 is a diagram illustrating a configuration of the control device of the ozone supply apparatus according to the first embodiment. The control device 18 includes a table holding unit 181 that holds an ozone concentration table 181a indicating a correspondence relationship between the pressure in the adsorption tower 7 at the time of desorption under reduced pressure and the ozone concentration of the ozone gas in the adsorption tower 7, an ozone concentration estimation unit 182 that estimates the ozone concentration of the ozone gas in the adsorption tower 7, based on the pressure in the adsorption tower 7 measured by the pressure gauge 13, by referring to the ozone concentration table 181a, and a flow rate adjustment unit 183 that adjusts the opening degree of the flow rate adjustment valve 17 based on an estimation result of the ozone concentration of the ozone gas in the adsorption tower 7.

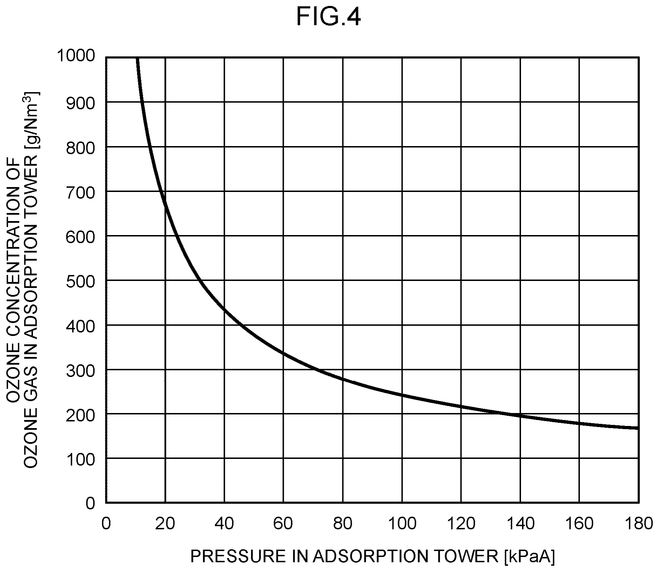

FIG. 4 is a diagram illustrating an example of a relationship between the pressure in the adsorption tower of the ozone supply apparatus according to the first embodiment and the ozone concentration of the ozone gas in the adsorption tower. If an adsorption condition in the adsorption process is a preset value, as illustrated in FIG. 4, the pressure in the adsorption tower 7 and the ozone concentration of the ozone gas in the adsorption tower correspond to each other on a one-to-one basis. Note that, as the adsorption condition in the adsorption process, an adsorption ozone concentration, a pressure, a temperature, and the like are exemplified. The ozone concentration table 181a is generated based on the relationship between the pressure in the adsorption tower and the ozone concentration of ozone gas in the adsorption tower illustrated in FIG. 4. Therefore, the ozone concentration estimation unit 182 can uniquely specify the ozone concentration of the ozone gas corresponding to the pressure in the adsorption tower 7, by referring to the ozone concentration table 181a.

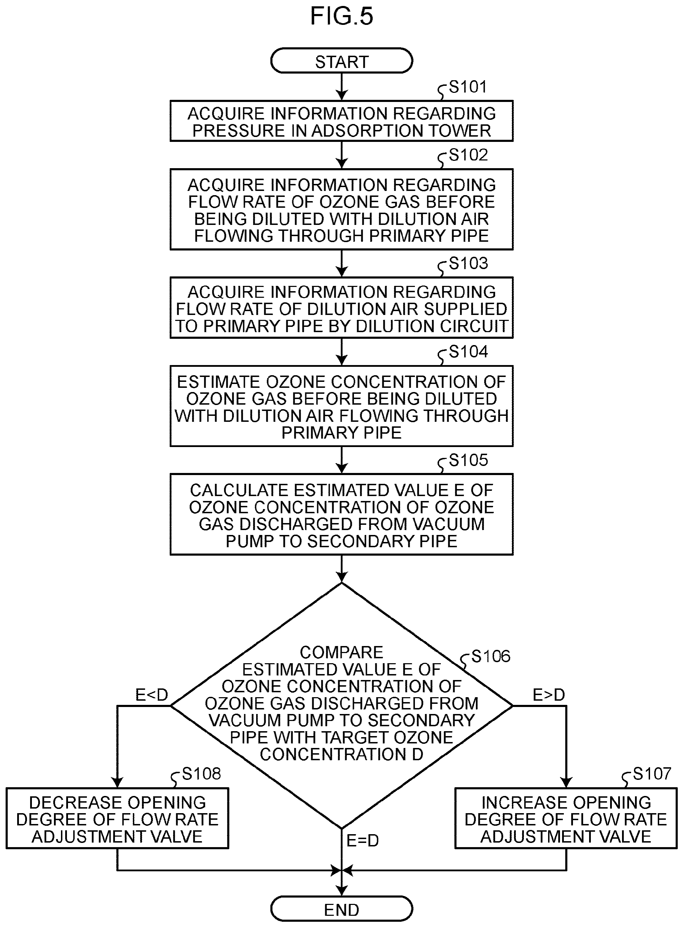

FIG. 5 is a flowchart illustrating a flow of an operation in the desorption process of the ozone supply apparatus according to the first embodiment. In the desorption process, the ozone supply apparatus 100 supplies the compressed air to the adsorption tower 7 by the desorption purge circuit 11 and sucks ozone gas from the ozone pipe 10 by the vacuum pump 12.

In step S101, the ozone concentration estimation unit 182 acquires information regarding the pressure in the adsorption tower 7 measured by the pressure gauge 13.

In step S102, the ozone concentration estimation unit 182 acquires information regarding the flow rate of the ozone gas before being diluted with the dilution air flowing through the primary pipe 15 measured by the first flow meter 14.

In step S103, the ozone concentration estimation unit 182 acquires information regarding the flow rate of the dilution air supplied to the primary pipe 15 by the dilution circuit 40 measured by the second flow meter 16.

In step S104, the ozone concentration estimation unit 182 estimates the ozone concentration of the ozone gas before being diluted with the dilution air flowing through the primary pipe 15, based on the pressure in the adsorption tower 7, by referring to the ozone concentration table 181a.

In step S105, the ozone concentration estimation unit 182 calculates an estimated value E of the ozone concentration of the ozone gas discharged from the vacuum pump 12 to the secondary pipe 19, based on an estimated value of the ozone concentration of the ozone gas before being diluted with the dilution air flowing through the primary pipe 15, the flow rate of the ozone gas before being diluted with the dilution air flowing through the primary pipe 15, and the flow rate of the dilution air supplied to the primary pipe 15 by the dilution circuit 40.

In step S106, the flow rate adjustment unit 183 compares the estimated value E of the ozone concentration of the ozone gas discharged from the vacuum pump 12 to the secondary pipe 19 with a target ozone concentration D. If the estimated value E of the ozone concentration of the ozone gas discharged from the vacuum pump 12 to the secondary pipe 19 is a value higher than the preset target ozone concentration D, this indicates that E>D in step S106, and the flow rate adjustment unit 183 increases the opening degree of the flow rate adjustment valve 17 in step S107. If the estimated value E of the ozone concentration of the ozone gas discharged from the vacuum pump 12 to the secondary pipe 19 is a value lower than the target ozone concentration D, this indicates that E<D in step S106, and the flow rate adjustment unit 183 decreases the opening degree of the flow rate adjustment valve 17 in step S108. If the estimated value E of the ozone concentration of the ozone gas discharged from the vacuum pump 12 to the secondary pipe 19 is the same as the target ozone concentration D, this indicates that E=D in step S106, and the flow rate adjustment unit 183 ends the processing without changing the opening degree of the flow rate adjustment valve 17. Note that, here, although a case has been described where the opening degree of the flow rate adjustment valve 17 is controlled based on a magnitude relationship between the preset target ozone concentration D and the estimated value E of the ozone concentration of the ozone gas discharged from the vacuum pump 12 to the secondary pipe 19, if the estimated value E of the ozone concentration of the ozone gas discharged from the vacuum pump 12 to the secondary pipe 19 is a value lower than an ozone concentration region that is lower than the target ozone concentration D by a preset first value, the opening degree of the flow rate adjustment valve 17 may be decreased, and if the estimated value E of the ozone concentration of the ozone gas discharged from the vacuum pump 12 to the secondary pipe 19 is a value higher than an ozone concentration region that is higher than the target ozone concentration D by a preset second value, the opening degree of the flow rate adjustment valve 17 may be increased. In this case, the first value and the second value may be the same or different values. In this way, a frequency of controlling the opening degree of the flow rate adjustment valve 17 can be reduced.

As the ozone concentration meter that measures the ozone concentration of the ozone gas, an ultraviolet absorbing type ozone concentration meter that measures an ozone concentration based on a light absorption amount, using a property of ozone for strongly absorbing a wavelength of 254 nm, is generally used. However, the ultraviolet absorbing type ozone concentration meter is more expensive than a general pressure gauge. Since the ozone supply apparatus 100 according to the first embodiment estimates the ozone concentration of the ozone gas in the adsorption tower 7 based on the pressure measured by the pressure gauge 13, manufacturing cost can be reduced, as compared with an ozone supply apparatus that measures the ozone concentration of the ozone gas in the adsorption tower 7 using the ozone concentration meter.

Furthermore, in a case where contamination that cannot be visually recognized is attached to a light emission unit or a light reception unit of the ultraviolet absorbing type ozone concentration meter, the ozone concentration is measured to be higher than an original value because the ultraviolet is blocked by the contamination. Therefore, the ultraviolet absorbing type ozone concentration meter needs to be periodically maintained. Therefore, the ozone supply apparatus that measures the ozone concentration of the ozone gas in the adsorption tower using the ultraviolet absorbing type ozone concentration meter needs to periodically stop supply of ozone for maintenance of the ozone concentration meter. On the other hand, since the ozone supply apparatus 100 according to the first embodiment estimates the ozone concentration of the ozone gas in the adsorption tower 7 based on the pressure measured by the pressure gauge 13, the maintenance of the ozone concentration meter is not necessary, and reduction in maintenance cost and stable supply of ozone gas with a target ozone concentration can be achieved.

Furthermore, since the dilution circuit 40 supplies the dilution air to the primary pipe 15, the ozone supply apparatus 100 according to the first embodiment can lower the ozone concentration of the ozone gas flowing into the vacuum pump 12. Therefore, it is possible to prevent deterioration of the vacuum pump 12 due to corrosion caused by the ozone gas.

### Second Embodiment.

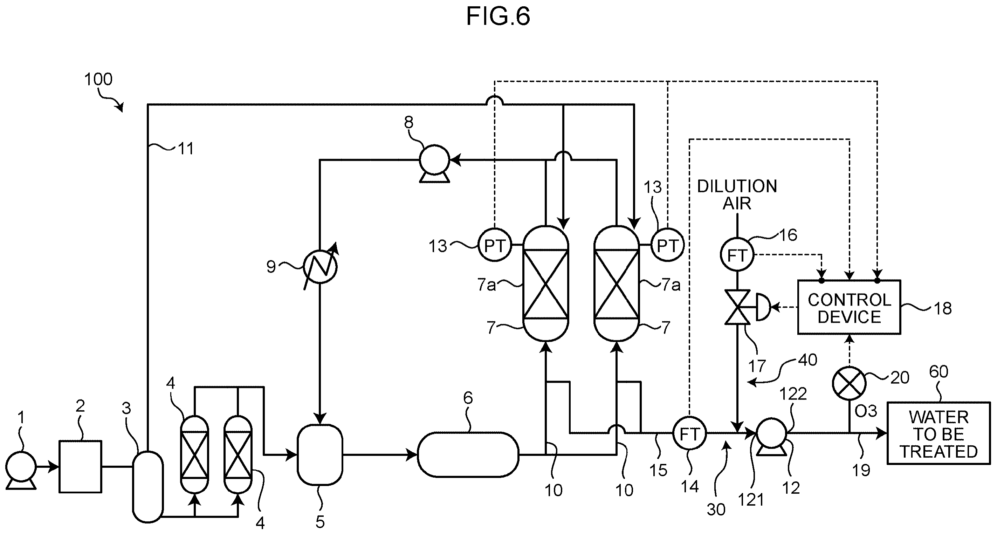

FIG. 6 is a diagram illustrating a configuration of an ozone supply apparatus according to a second embodiment. The ozone supply apparatus 100 according to the second embodiment is different from the ozone supply apparatus 100 according to the first embodiment in that an ozone concentration meter 20 is installed in the secondary pipe 19. Other configurations are similar to those of the ozone supply apparatus 100 according to the first embodiment. The ozone concentration meter 20 measures an ozone concentration of ozone gas in the secondary pipe 19 diluted with the dilution air.

The ozone concentration meter 20 outputs a measurement result of the ozone concentration of the ozone gas in the secondary pipe 19 diluted with the dilution air, to the control device 18.

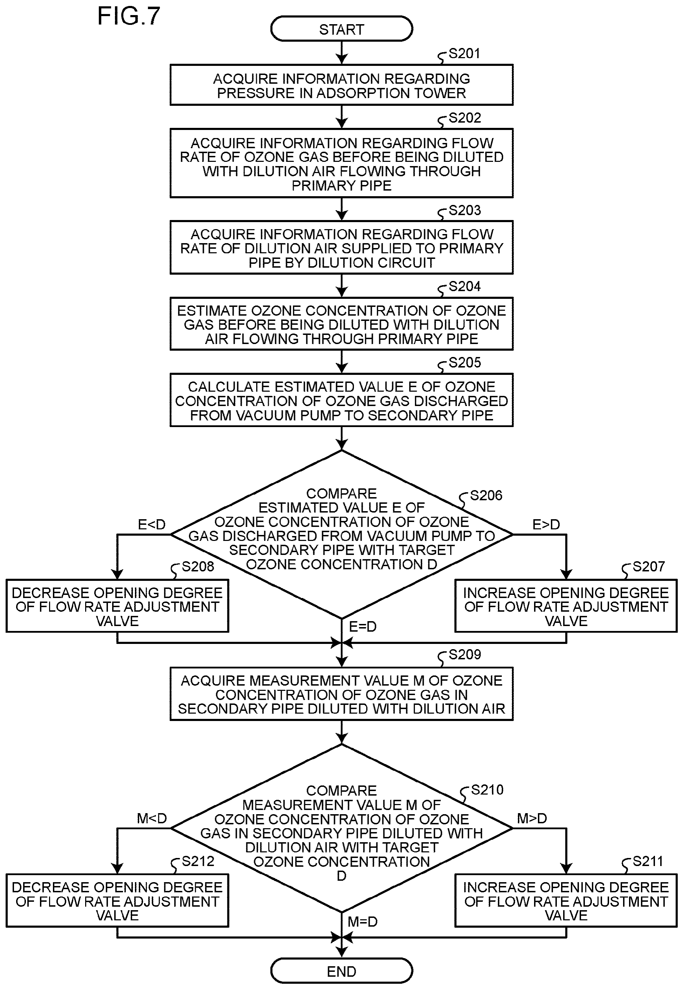

FIG. 7 is a flowchart illustrating a flow of an operation at the time of ozone desorption of the ozone supply apparatus according to the second embodiment. Processing from step S201 to step S208 is similar to the processing from step S101 to step S108 of the operation at the time of ozone desorption of the ozone supply apparatus 100 according to the first embodiment. In step S209, the flow rate adjustment unit 183 acquires a measurement value M of the ozone concentration of the ozone gas in the secondary pipe 19 diluted with the dilution air, from the ozone concentration meter 20. In step S210, the flow rate adjustment unit 183 compares the measurement value M of the ozone concentration of the ozone gas in the secondary pipe 19 diluted with the dilution air with the target ozone concentration D. If the measurement value M of the ozone concentration of the ozone gas flowing through the secondary pipe 19 is a value higher than the target ozone concentration D, this indicates that M>D in step S210, and the control device 18 increases the opening degree of the flow rate adjustment valve 17 in step S211. If the measurement value M of the concentration of the ozone gas in the secondary pipe 19 diluted with the dilution air is a value lower than the target ozone concentration D, this indicates that M<D in step S210, and the control device 18 decreases the opening degree of the flow rate adjustment valve 17 in step S212. If the measurement value M of the ozone concentration of the ozone gas in the secondary pipe 19 diluted with the dilution air is the same as the target ozone concentration D, this indicates that E=D in step S210, and the control device 18 ends the processing without changing the opening degree of the flow rate adjustment valve 17.

Note that, here, although a case where the opening degree of the flow rate adjustment valve 17 is controlled based on a magnitude relationship between the preset target ozone concentration D and the measurement value M of the ozone concentration of the ozone gas in the secondary pipe 19 diluted with the dilution air has been described as an example, if the measurement value M of the ozone concentration of the ozone gas in the secondary pipe 19 diluted with the dilution air is a value lower than an ozone concentration region that is lower than the target ozone concentration D by a preset third value, the opening degree of the flow rate adjustment valve 17 may be decreased, and if the measurement value M of the ozone concentration of the ozone gas in the secondary pipe 19 diluted with the dilution air is a value higher than an ozone concentration region that is higher than the target ozone concentration D by a preset fourth value, the opening degree of the flow rate adjustment valve 17 may be increased. In this case, the third value and the fourth value may be the same or different values. In this way, the frequency of controlling the opening degree of the flow rate adjustment valve 17 can be reduced.

Since the control device 18 of the ozone supply apparatus 100 according to the second embodiment adjusts a supply amount of the dilution air by feedback controlling the flow rate adjustment valve 17 based on the measurement value of the concentration of the ozone gas in the secondary pipe 19 diluted with the dilution air, the concentration of the ozone gas to be discharged to outside from the secondary pipe 19 can be made closer to the target ozone concentration. Since the ozone concentration meter 20 installed in the secondary pipe 19 can be removed without decomposing the adsorption tower 7, it is easy to perform maintenance such that a fluctuation of the measurement value of the ozone concentration does not exceed an allowable value. Therefore, the ozone supply apparatus 100 according to the second embodiment can suppress the fluctuation of the measurement value over time by periodically maintaining the ozone concentration meter 20.

### Third Embodiment.

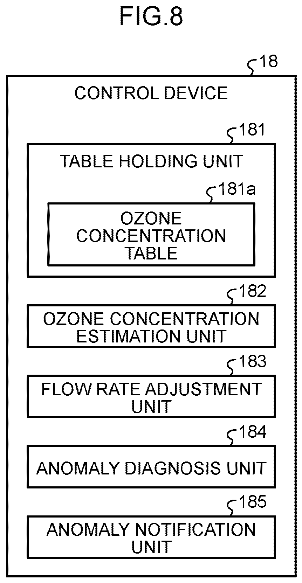

FIG. 8 is a diagram illustrating a configuration of a control device of an ozone supply apparatus according to a third embodiment. The ozone supply apparatus 100 according to the third embodiment is different from the ozone supply apparatus 100 according to the second embodiment in that the control device 18 includes an anomaly diagnosis unit 184 and an anomaly notification unit 185. Other configurations are similar to those of the ozone supply apparatus 100 according to the second embodiment.

The anomaly diagnosis unit 184 determines that an anomaly has occurred in a case where a difference between the measurement value M of the ozone concentration of the ozone gas in the secondary pipe 19 diluted with the dilution air, acquired from the ozone concentration meter 20, and the estimated value E of the concentration of the ozone gas discharged from the vacuum pump 12 to the secondary pipe 19 becomes larger than a preset threshold, and causes the anomaly notification unit 185 to provide a notification that the anomaly has occurred. The anomaly notification unit 185 may be a display device such as a liquid crystal display that can display a message or an alarm lamp that provides a notification that the anomaly has occurred by lighting or blinking.

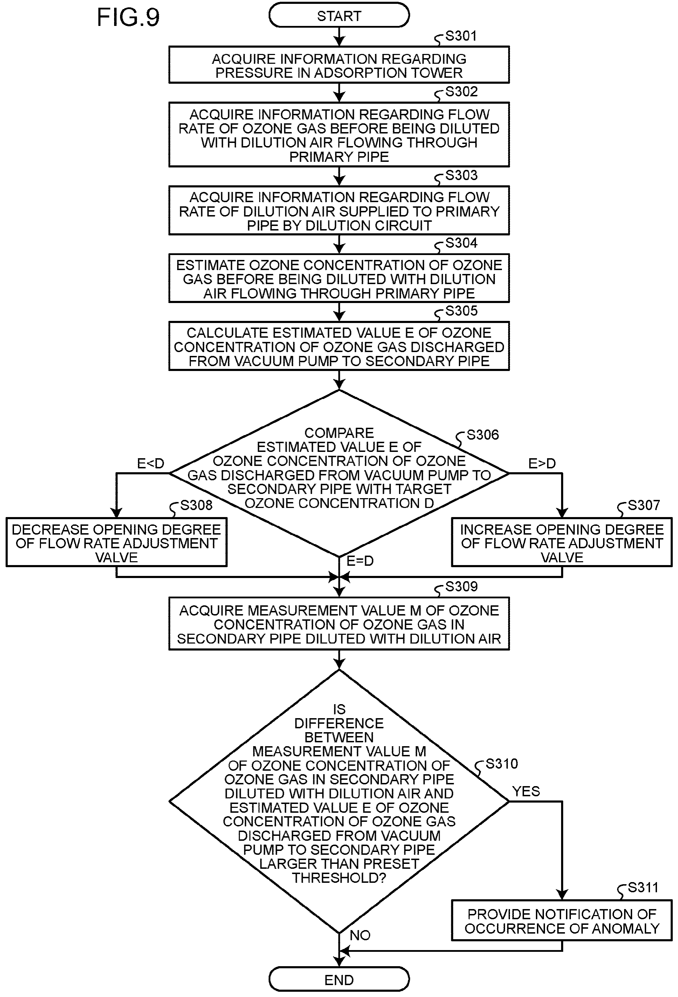

FIG. 9 is a flowchart illustrating a flow of an operation at the time of ozone desorption of the ozone supply apparatus according to the third embodiment. Processing from step S301 to step S308 is similar to the processing from step S101 to step S108 of the operation at the time of ozone desorption of the ozone supply apparatus 100 according to the first embodiment.

In step S309, the control device 18 acquires, from the ozone concentration meter 20, the measurement value M of the ozone concentration of the ozone gas in the secondary pipe 19 diluted with the dilution air. In step S310, the control device 18 determines whether the difference between the measurement value M of the ozone concentration of the ozone gas in the secondary pipe 19 diluted with the dilution air and the estimated value E of the concentration of the ozone gas discharged from the vacuum pump 12 to the secondary pipe 19 is larger than a preset threshold. If the difference between the measurement value M of the ozone concentration of the ozone gas in the secondary pipe 19 diluted with the dilution air and the estimated value E of the concentration of the ozone gas discharged from the vacuum pump 12 to the secondary pipe 19 is equal to or less than the preset threshold, No is selected in step S310, and the processing ends. If the difference between the measurement value M of the ozone concentration of the ozone gas in the secondary pipe 19 diluted with the dilution air and the estimated value E of the concentration of the ozone gas discharged from the vacuum pump 12 to the secondary pipe 19 is larger than the preset threshold, Yes is selected in step S310, and the control device 18 causes the anomaly notification unit 185 to provide a notification that the anomaly has occurred in step S311.

If the adsorbent 7a installed in the adsorption tower 7 deteriorates, an amount of the ozone gas stored in the adsorption tower 7 is reduced, and the concentration of the ozone gas discharged from the vacuum pump 12 to the secondary pipe 19 decreases. Therefore, the difference between the measurement value M of the ozone concentration of the ozone gas in the secondary pipe 19 diluted with the dilution air and the estimated value E of the concentration of the ozone gas discharged from the vacuum pump 12 to the secondary pipe 19 increases. The ozone supply apparatus 100 according to the third embodiment can provide a notification that the anomaly has occurred, in a case where the difference between the measurement value M of the ozone concentration of the ozone gas in the secondary pipe 19 diluted with the dilution air and the estimated value E of the concentration of the ozone gas discharged from the vacuum pump 12 to the secondary pipe 19 is larger than the preset threshold. Therefore, a user of the ozone supply apparatus 100 according to the third embodiment can determine whether the adsorbent 7a installed in the adsorption tower 7 has deteriorated, without decomposing the adsorption tower 7.

### Fourth Embodiment.

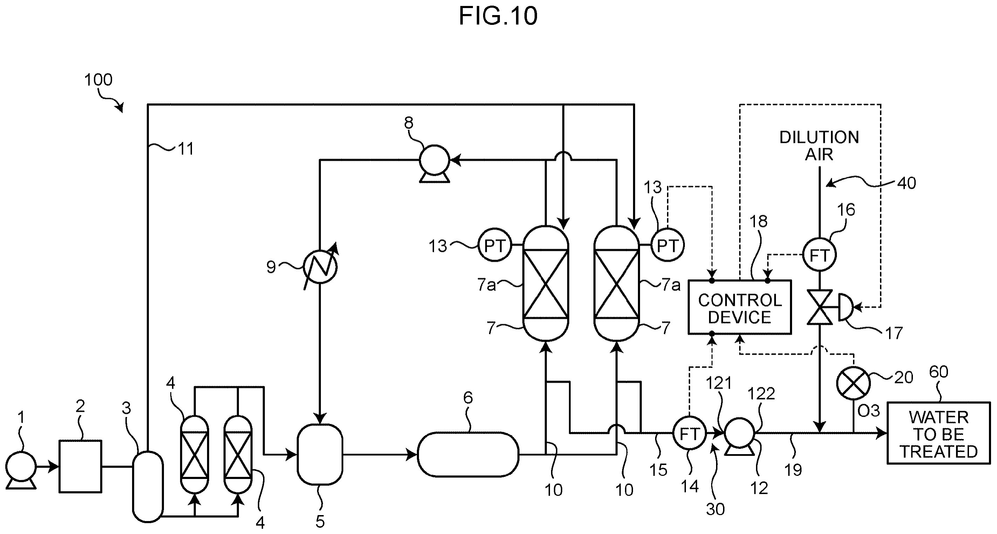

FIG. 10 is a diagram illustrating a configuration of an ozone supply apparatus according to a fourth embodiment. The ozone supply apparatus 100 according to the fourth embodiment is different from the ozone supply apparatus 100 according to the second embodiment, in that the dilution circuit 40 mixes dilution air into the ozone gas flowing through the secondary pipe 19. Other configurations are similar to those of the ozone supply apparatus 100 according to the second embodiment.

In the ozone supply apparatus 100 according to the fourth embodiment, since the dilution circuit 40 supplies the dilution air to the secondary pipe 19 and adjusts the concentration of the ozone gas, the dilution air does not flow into the vacuum pump 12. Therefore, the small vacuum pump 12 with a small exhaust amount can be applied, and the size of the apparatus can be reduced.

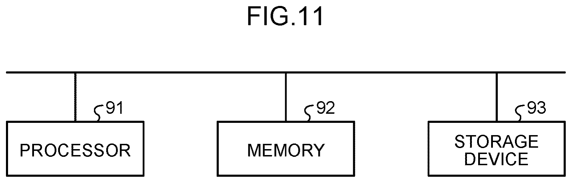

FIG. 11 is a diagram illustrating a hardware configuration of the control device of the ozone supply apparatus according to the first to fourth embodiments. The control device 18 is achieved by a computer system including a processor 91 that executes various types of processing, a memory 92 that is a main memory, and a storage device 93 that stores information.

The processor 91 may be calculation means such as a calculation device, a microprocessor, a microcomputer, a Central Processing Unit (CPU), or a Digital Signal Processor (DSP). Furthermore, as the memory 92, a nonvolatile or volatile semiconductor memory can be used such as a Random Access Memory (RAM), a Read Only Memory (ROM), a flash memory, an Erasable Programmable Read Only Memory (EPROM), or an Electrically Erasable Programmable Read Only Memory (EEPROM) (registered trademark). The storage device 93 stores a program for executing processing for estimating the ozone concentration of the ozone gas discharged from the vacuum pump 12 to the secondary pipe 19 and adjusting the flow rate of the dilution air to be mixed into the ozone gas flowing through the decompression circuit 30 by the dilution circuit 40, so that the ozone concentration of the ozone gas discharged from the vacuum pump 12 to the secondary pipe 19 becomes the target ozone concentration.

The computer system achieves the function of the control device 18, by the processor 91 reading the program corresponding to the processing of each component on the memory 92 and executing the program, stored in the storage device 93. Furthermore, the memory 92 is also used as a transitory memory in each processing executed by the processor 91. The program executed by the processor 91 may be provided in a state of being stored in a storage medium or may be provided via a network.

Note that, although the ozone supply apparatus 100 including the control device 18 has been described in the first to fourth embodiments, the control device 18 can be separately provided as a device independent from the ozone supply apparatus 100.

The configurations described in the above embodiments indicate an example of content and can be combined with other known techniques. Furthermore, the configurations described in the embodiments can be partially omitted or changed without departing from the scope.

### Reference Signs List

1 compressor; 2 dryer; 3 air tank; 4 oxygen generator; 5 raw material gas tank; 6 ozone generator; 7 adsorption tower; 7a adsorbent; 8 circulation pump; 9 cooler; 10 ozone pipe; 11 desorption purge circuit; 12 vacuum pump; 13 pressure gauge; 14 first flow meter; 15 primary pipe; 16 second flow meter; 17 flow rate adjustment valve; 18 control device; 19 secondary pipe; 20 ozone concentration meter; 30 decompression circuit; 40 dilution circuit; 60 water to be treated; 91 processor; 92 memory; 93 storage device; 100 ozone supply apparatus; 121 suction port; 122 discharge port; 181 table holding unit; 181a ozone concentration table; 182 ozone concentration estimation unit; 183 flow rate adjustment unit; 184 anomaly diagnosis unit; 185 anomaly notification unit.

## Claims

1. An ozone supply apparatus comprising:
an ozone generator to generate ozonized gas containing ozone gas;
an adsorption tower including an adsorbent that adsorbs the ozone gas contained in the ozonized gas;
an ozone pipe to connect the ozone generator to the adsorption tower;
a decompression circuit to suck the ozone gas desorbed from the adsorbent from inside of the adsorption tower through the ozone pipe, the decompression circuit including a decompression mechanism to discharge, from a discharge port, gas sucked from a suction port, a primary pipe to connect the suction port to the ozone pipe, and a secondary pipe connected to the discharge port;
a dilution circuit to mix dilution air into the ozone gas flowing through the decompression circuit;
a first flow meter installed in the decompression circuit;
a second flow meter and a flow rate adjustment valve installed in the dilution circuit;
a pressure gauge installed in the adsorption tower; and
a control device to estimate an ozone concentration of the ozone gas discharged by the decompression mechanism to the secondary pipe, based on a measurement value of each of the first flow meter, the second flow meter, and the pressure gauge and to adjust an opening degree of the flow rate adjustment valve such that an estimated value of the ozone concentration of the ozone gas discharged from the decompression mechanism to the secondary pipe becomes a preset target value.

2. The ozone supply apparatus according to claim 1, comprising:
an ozone concentration meter to measure an ozone concentration of the ozone gas diluted with the dilution air, in the secondary pipe, wherein
the control device feedback controls the opening degree of the flow rate adjustment valve based on a measurement value of the ozone concentration meter.

3. The ozone supply apparatus according to claim 2, wherein
the control device includes
an anomaly diagnosis unit to determine that an anomaly has occurred in a case where a difference between the measurement value of the ozone concentration of the ozone gas diluted with the dilution air, acquired from the ozone concentration meter and the estimated value of the ozone concentration of the ozone gas diluted with the dilution air becomes larger than a preset threshold, and
an anomaly notification unit to provide a notification that the anomaly has occurred.

4. The ozone supply apparatus according to claim 1, comprising:
an ozone concentration meter to measure an ozone concentration of the ozone gas diluted with the dilution air, in the secondary pipe, wherein
the control device includes
an anomaly diagnosis unit to determine that an anomaly has occurred in a case where a difference between a measurement value of the ozone concentration of the ozone gas diluted with the dilution air, acquired from the ozone concentration meter and the estimated value of the ozone concentration of the ozone gas diluted with the dilution air becomes larger than a preset threshold, and
an anomaly notification unit to provide a notification that the anomaly has occurred.

5. The ozone supply apparatus according to any one of claims 1 to 4, wherein the dilution circuit mixes the dilution air into the ozone gas flowing through the primary pipe.

6. The ozone supply apparatus according to any one of claims 1 to 4, wherein the dilution circuit mixes the dilution air into the ozone gas flowing through the secondary pipe.

7. An ozone supply method comprising:
a step of measuring a pressure in an adsorption tower including an adsorbent that adsorbs ozone gas, a flow rate of the ozone gas sucked from the adsorption tower by a decompression mechanism, and a flow rate of dilution air to be mixed into the ozone gas sucked from the adsorption tower by the decompression mechanism;
a step of estimating an ozone concentration of the ozone gas diluted with the dilution air, based on measurement values of the pressure in the adsorption tower, the flow rate of the ozone gas sucked from the adsorption tower by the decompression mechanism, and the flow rate of the dilution air; and
a step of adjusting the flow rate of the dilution air such that an estimated value of the ozone concentration of the ozone gas diluted with the dilution air becomes a preset target value.
